# EUROPEAN PATENT APPLICATION

(11) **EP 1 434 411 A1**
(43) Date of publication of application: **30.06.2004**
(21) Application number: 02028890.8
(22) Date of filing: 23.12.2002
(51) Int. Cl.: H04M 1/247, H04M 1/725, G06F 3/033

(54) **Mobile device providing detailed information about status icons**

(71) Applicant: Sony Ericsson Mobile Communications AB, 221 88 Lund (SE)
(72) Inventor: Ögren, Per, 217 53 Malmö (SE)
(74) Representative: Dahnér, Christer

(57) **Abstract**

The present invention is directed towards a method and a portable electronic device for providing further information relating to the status of a portable electronic device. The device comprises an information presentation unit (14), at least one first user input unit, and a control unit. The control unit provides an item of status information (32, 34, 35, 36, 38) relating to the performance of the portable electronic device or possibly activated applications and functions in the device on the information presentation unit (14) and upon detecting a selection of further information via the user input unit simultaneously provides limited further information (40, 42, 44, 45, 46, 47, 48, 50, 52, 54) relating to said item of status information on the information presentation unit. With the invention further information related to icons shown in a status bar of the device can easily be accessed.

## Description

### TECHNICAL FIELD OF THE INVENTION

The present invention relates to the field of portable electronic devices and more particularly to a method and a portable electronic device for providing further information relating to the status of the device.

### DESCRIPTION OF RELATED ART

The cellular phones of today have more and more different functions and applications in them. It is today normal to provide the phones with a status bar showing the status of the phone in the form of battery power level, signal strength information as well as status information relating to different functions and applications, like if a phone call has been missed or if there is an incoming electronic message in the form of SMS or e-mail. This information is furthermore normally displayed in the form of icons or symbols only giving general information about the status.

Further information relating to the information shown in these status bars is however not directly accessible to a user of the phone. Such information can be from who the missed call was and the remaining stand-by time for a battery. In order to get this information, the user has to navigate though a general menu in order to get to the function in question for finding out who called. It is furthermore possible to set short cuts through the menu system, but then these are fixed and not event driven. The user must know beforehand that he might be interested in the further information and program such a short-cut in advance in order to save some time in the navigation. In order to reach such a short cut the user furthermore has to start in the normal menu system, which thus also takes up valuable time.

There is thus a need for providing easily accessible further information that can be presented on a limited size information presentation unit in relation to status information.

### SUMMARY OF THE INVENTION

The present invention is thus directed towards solving the problem of providing easily accessible further information related to status information that can be presented on a limited size information presentation unit.

This is achieved by providing further information about an item of status information shown to a user upon the detection of a selection of the further information from the user.

One object of the present invention is to provide a method enabling easy access to further information related to status information that can be presented on a limited size information presentation unit.

According to a first aspect of the present invention, the object is achieved by a method of providing further information relating to the status of a portable electronic device comprising the steps of:
providing an item of status information relating to the performance of a portable electronic device, possibly activated applications or functions in the device, and
upon detecting a selection of further information providing limited further information relating to said item.

A second aspect of the present invention is directed to a method including the features of the first aspect, wherein the step of providing includes providing at least two items of status information and the step of providing limited further information includes simultaneously providing said limited further information relating to the two items.

A third aspect of the present invention is directed towards a method including the features of the first aspect, wherein said further information comprises a link back to said item of status information such as through a "back"-key.

A fourth aspect of the present invention is directed towards a method including the features of the third aspect, further comprising the step of removing the further information upon detecting selection of the link back to said item of status information and again presenting said item of status information.

A fifth aspect of the present invention is directed towards a method including the features of the first aspect, wherein the further information provided related to an item of status information is a limited number of pieces of information.

A sixth aspect of the present invention is directed towards a method including the features of the first aspect, further including the step of detecting selection of an item of status information after providing limited further information and determining type of item selected.

A seventh aspect of the present invention is directed towards a method including the features of the sixth aspect, further including the step of: if the first item of status information relates to an application, determining if an action in relation to the application was selected and performing said action or providing a list of further possible actions and selections relating to the application in dependence of the determination.

An eighth aspect of the present invention is directed towards a method including the features of the sixth aspect, further comprising the step of: if the first item of status information relates to a function, determining if an action in relation to the function was selected and performing said action or providing a list of further possible actions and selections relating to the function in dependence of the determination.

A ninth aspect of the present invention is directed towards a method including the features of the sixth aspect, further comprising the step of: if the first item of status information relates to the performance of the portable electronic device, providing a list of further possible actions and selections relating to the performance.

Another object of the present invention is to provide a portable electronic device, which enables easy access to further information related to status information that can be presented on a limited size information presentation unit.

According to a tenth aspect of the present invention, this object is achieved by a portable electronic device for providing further information relating to the status of said portable electronic device comprising:
an information presentation unit,
at least one first user input unit, and
a control unit arranged to:
   provide an item of status information relating to the performance of the portable electronic device and possibly activated applications and functions in the device on the information presentation unit, and
   upon detecting a selection of further information via the user input unit, provide limited further information relating to said item of status information on the information presentation unit.

An eleventh aspect of the present invention is directed towards a device including the features of the tenth aspect, wherein the control unit is arranged to provide at least two items of status information and to simultaneously provide limited further information relating to the two items.

A twelfth aspect of the present invention is directed towards a device including the features of the tenth aspect, further including a second user input unit for moving back to said item of status information.

A thirteenth aspect of the present invention is directed towards a device including the features of the twelfth aspect, wherein the control unit is further arranged to remove the further information from the information presentation unit upon detecting depression of the second user input and again present said item of status information on the information presentation unit.

A fourteenth aspect of the present invention is directed towards a device including the features of the tenth aspect, wherein the further information provided related to an item of status information is a limited number of pieces of information.

A fifteenth aspect of the present invention is directed towards a device including the features of the tenth aspect, wherein the first user input unit is provided as a button on the side of the portable communication device.

A sixteenth aspect of the present invention is directed towards a device including the features of the tenth aspect, wherein the control unit is arranged to detect selection of an item of status information after providing limited further information and to determine type of item selected.

A seventeenth aspect of the present invention is directed towards a device including the features of the sixteenth aspect, wherein the control unit is further arranged to, if the first item of status information relates to an application, determine if an action in relation to the application was selected and then perform said action or provide a list of further possible actions and selections relating to the application.

An eighteenth aspect of the present invention is directed towards a device including the features of the sixteenth aspect, wherein the control unit is further arranged to, if the first item of status information relates to a function, determine if an action in relation to the function was selected and then perform said action or provide a list of further possible actions and selections relating to the function.

A nineteenth aspect of the present invention is directed towards a device including the features of the sixteenth aspect, wherein the control unit is further arranged to, if the first item of status information relates to the performance of the portable electronic device, provide a list of further possible actions and selections relating to the performance.

A twentieth aspect of the present invention is directed towards a device including the features of the sixteenth aspect, further comprising a second user input unit in the form of at least one key on a keypad of the device, which second unit is used for any selections made in relation to the further information shown on the information presentation unit.

A twenty-first aspect of the present invention is directed towards a device including the features of the tenth aspect, further comprising a status information store, from which the control unit is arranged to retrieve said item of status information for provision on the information presentation unit.

A twenty-second aspect of the present invention is directed towards a device including the features of the tenth aspect, further comprising a further information store, from which the control unit is arranged to retrieve further information relating to said item of status information for provision on the information presentation unit.

A twenty-third aspect of the present invention is directed towards a device including the features of the tenth aspect, wherein the portable electronic device is a cellular phone.

The invention has the following advantages. It allows a user to directly get further information about items of information presented in a status bar in a portable electronic device. A user can then easily see further information of activated functions and applications as well as the performance of the device. If the item is an icon, this is additionally advantageous when a user does not know what the item presented means.

The expression performance of a device is meant to include variable characteristics like battery energy level and signal strength, the expression function is intended to include functions set by a user of the device, like the time, date, ring signals and other settings possible to make. With an application unit is meant a unit providing a substantial amount of information to a user of the device, which unit also requires at least some activities by the user, like the making of phone calls, sending, receiving and reading electronic messages and playing music and games.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 shows a front view of a portable electronic device in the form of a cellular phone,
fig. 2 shows a block schematic of the relevant parts of the invention inside the phone in fig. 1,
fig. 3 shows a front view of the display in the phone from fig. 1 showing a status bar,
fig. 4 shows a front view of the display in the phone from fig. 1 showing further information relating to the status bar,
fig. 5A shows the first part of a method according to the invention, and
fig. 5B shows a second part of the method according to the invention.

### DETAILED DESCRIPTION OF EMBODIMENTS

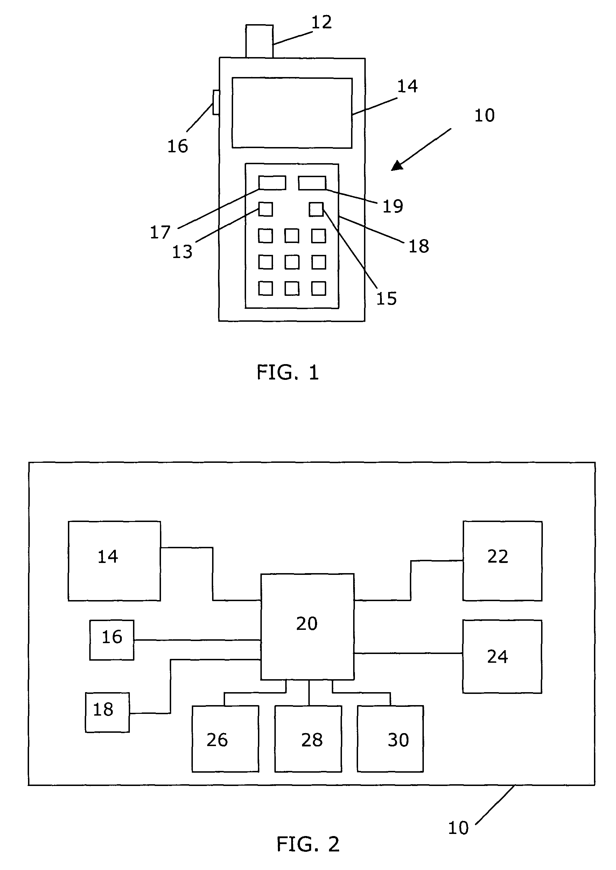

A portable electronic device 10 according to the invention is shown in a front view in fig. 1. In the preferred embodiment the device is a cellular phone 10 having an antenna 12, a display 14, a first user input unit in the form of a button 16 provided on the side of the phone as well as a keypad 18 including a number of keys. The button 16 is a so called volume button, which can be used for adjusting the volume setting of the phone, but in the present invention it has one further function, which will be described in more detail later. Apart from making and receiving telephone calls, the keypad 18 is used for entering information such as selection of functions and applications and responding to prompts and the display 14 is used for displaying functions and prompts to a user of the phone. In order to do this, the keys at the top of the keypad are navigation keys, of which a first pair at the top includes a first and second soft navigation key 17 and 19. The key pad 18 also includes a second pair of hard navigation keys including a "back"-key 13 and a cancellation key 15. The soft keys can be used for navigating in a menu system provided in the phone, and the "back"-key 13 is used for moving backwards in the menu system. The antenna 12 is used for communication with other users via a network. A cellular phone is just one example of a device in which the invention can be implemented. The invention can for instance also be used in a PDA (personal digital assistant), a palm top computer, a lap top computer and a smartphone.

Fig. 2 shows a block schematic of the different parts of the phone 10 relevant to the present invention. The display 14, the first input unit 16 and the keypad 18 are here shown as separate boxes connected to a control unit 20. The control unit 20 is furthermore connected to a status information store 22 and to a further information store 24 as well as to a first function unit 26, to a first application unit 28 and to a first performance determination unit 30. It should be realised that the control unit 20 can be connected to several application, function and performance determination units. Only three are however shown for better understanding of the present invention. A performance determination unit is a unit determining variable characteristics like one of battery energy level, signal strength or if the phone is synchronised with another device. A function unit is handling functions set by a user of the device, like the time, ring signals, ring signal volume or other settings possible to make in the device. An application unit handles activities by a user of the device in relation to the application, like the making of phone calls, sending, receiving and reading electronic messages, browsing using a Web or WAP browser and playing game or music or a camera. An application thus provides a user with a lot of information.

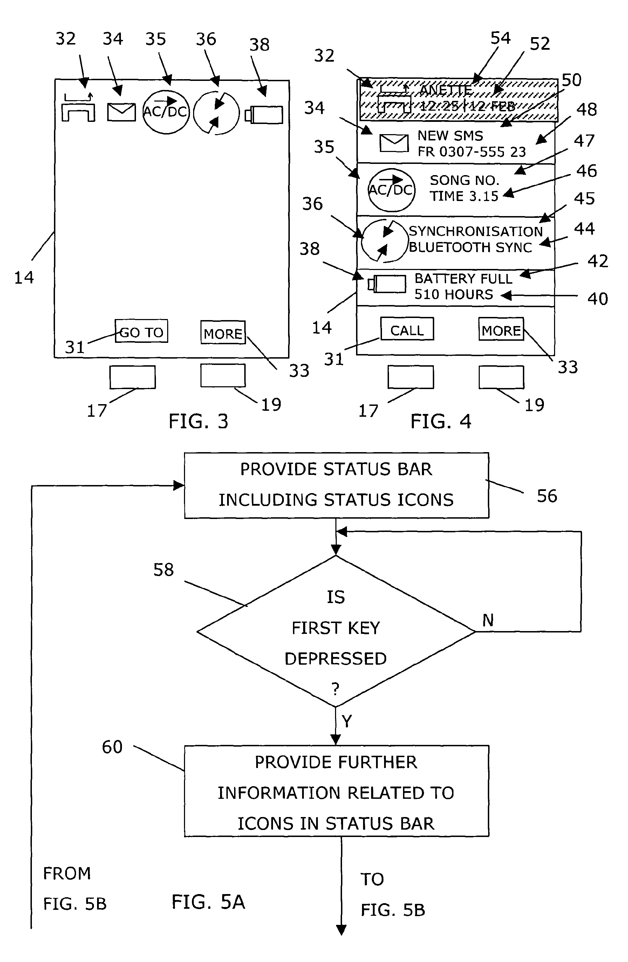

Fig. 3 shows a status bar displayed on the display of the phone together with the first set of soft keys 17 and 19 of the keypad, which status bar here include a number of icons, each associated with the status of either an application, a function or a performance of the phone. In fig. 3 there is shown a first icon 32 associated with the application of making phone calls and here indicating a missed phone call, a second icon 34 associated with the application SMS (Short Message Service) or e-mail application of the phone, a third icon 35 associated with an MP3-player, a fourth icon 36 associated with the performance of Bluetooth™ synchronisation and a fifth icon 38 associated with the performance of battery energy level of the phone. It should be realised that these are just a few of the possible performances, functions and applications for which an icon might be displayed. The display according to the preferred embodiment of the present invention can however only show five icons at one time in the status bar. It should furthermore be realised that some icons might be static, i.e. might be present at all times, which normally includes at least some of the performance icons, while some might only be provided if the application or function related to the phone has been activated or invoked either by the user of the phone himself or by some other type of influence, for instance the influence from outside the phone like the reception of an e-mail or a phone call. Other possible applications are for instance WAP browser and a camera. An example of a function normally shown in a status bar is the clock. At the bottom of the display of fig. 3 there is shown first soft information 31 associated with the first soft key 17 and second soft information 33 associated with the second soft key. The first and second soft information shown in the figure is associated with the normal menu system of the phone, which menu system is not shown in the figure.

Fig. 4 shows a second view of the display 14 together with the first set of soft keys 17 and 19 of the keypad, where further information in relation to the icons in the status bar is shown next to the icons. The icons are the same as in fig. 3. First and second soft key information 31 and 33 is shown in the bottom of the display just above the soft keys 17 and 19 and now the first soft key information 31 shows "call", while the second soft key information 33 shows "more". The fifth icon 38 is shown just above this soft key information and has a first item of further information 42 indicating that the battery is fully loaded and a second item of further information 40 indicating how much standby time there is left for the battery, which is here indicated as 510 hours. For this icon the soft keys are disabled, because the fifth icon 38 is no active icon for which any further information might be obtained. Just above the fifth icon, the fourth icon 36 is provided. The fourth icon 36 has a first item of further information 45 saying that the performance relates to synchronisation and a second item of further information 44 informing the user of the fact that the synchronisation is Bluetooth synchronisation, i.e. synchronisation with another device using Bluetooth™. The third icon 35 is provided above the first icon and is provided with a first item of further information 47 informing that the MP3-player is playing a certain song and a second item of further information 46 informing about how long this song has been played. Above the third icon 35, the second icon 34 is provided. The second icon 34 has a first item of further information 50 indicating that the message relates to an SMS (Short Message Service) and a second item of further information 48, indicating the sender of the SMS with a phone number 0307 - 555 23. Above the second icon 34, the first icon 32 is provided. The first icon 32 has a first item 54 of further information indicating from whom the missed call was made, this is indicated by the name Anette and a second item of further information 52 indicating when the missed call was made by displaying the time 12:25 and the date 12 of February. It should be noted that the name of Anette is shown because the user of the phone has set his phone book to indicate this name for a given number. If this is not the case the number of the person calling might be shown instead. The first icon 32 and the additional information54 and 52 relating to it is highlighted. This highlighting indicates that a selection of this icon can be made. The highlighting is shown with short diagonally directed dotted lines. It should be realised that the display can show up to seven icons, which can be seen through scrolling.

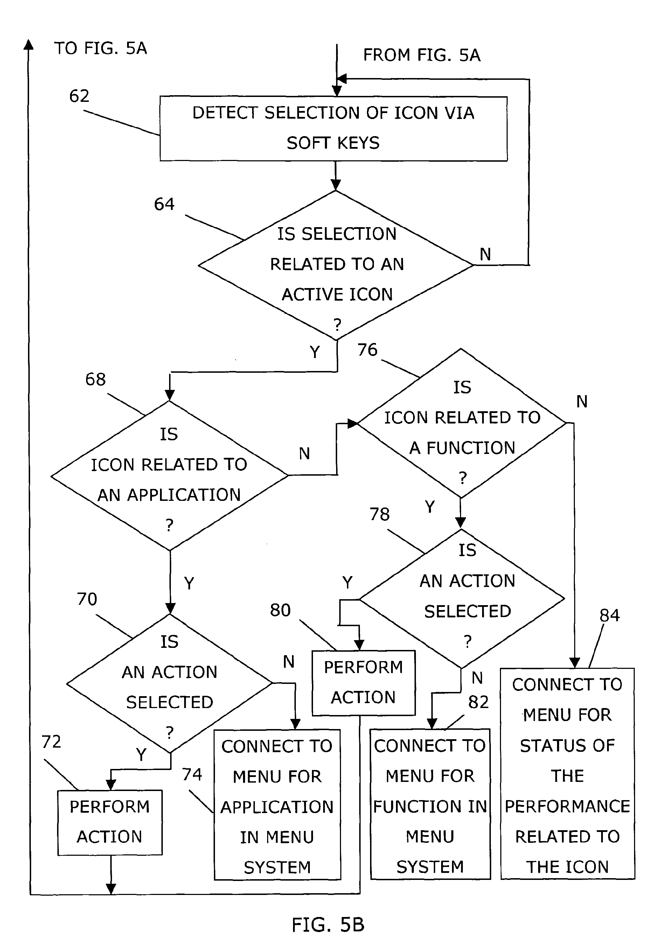

Fig. 5A and 5B shows a flow chart of the method according to the invention.

A preferred embodiment of the present invention will now be explained with reference to fig. 1, 2, 3, 4, 5A and 5B. This embodiment is also believed to be the best mode of the invention at the moment. The control unit 20 retrieves the icons in the status bar from the status information store 22 and provides them on the display 14 for displaying to the user, step 56. An example of the icons displayed is shown in fig. 3. It should be known that an application, function, or performance determination unit 26, 28 or 30 might signal to the control unit 20, their activation and then the control unit selects the icons corresponding to the activated application, function or performance unit for displaying on the display. Other performance determination units or function units might be constantly activated. Then the control unit 20 awaits an input from the first user input unit or button 16 on the side of the phone, step 58. If no input from the button 16 is detected, the control unit 20 returns to step 58 and again awaits an input from the button 16. By using the button 16 instead of the keypad 18, it is ensured that the use of applications or functions in the phone are not hampered. If an input is detected, step 58, the control unit 20 retrieves further information from the further information store 24 and provides a limited number of pieces of further information related to each icon in the status bar for displaying to the user of the phone, step 60. At the same time the display 14 shows information of what will happen if the soft keys are used for selecting pieces of information. Fig. 4 shows an example of such further information related to the icons shown in fig. 3. Now the user can see different items of further information in relation to the icons. It is furthermore possible to show more icons and related further information than what is shown in fig. 4. If the display will get full the user can then scroll among the further information by using a scrolling function in the phone (not shown). A maximum of seven icons might here be present. Scrolling could be provided by using a joystick or operation of an arrow button on the keypad (not shown). The control unit 20 furthermore provides different first and second soft key information 31 and 33 in dependence of which icon and corresponding first and second piece of information is highlighted. In fig. 4 the first icon 32 a missed call together with the corresponding first and second piece of further information 54 and 52 is highlighted and the first soft key information 31 displays "call" and the second soft key information 33 displays "more". The control unit 20 monitors the soft keys 31 and 33 and detects if a selection of further information relating to an active icon is made using these keys, step 64. With active icon is meant an icon for which there exists a menu or further information. The fifth icon 38 for the battery is not an active icon and therefore there is no possibility to select any further information relating to this icon. If a selection being made is not related to any further information of an icon, step 64, the control unit 20 does nothing and awaits a detection of another selection, step 62. It is furthermore possible to navigate backwards during this navigation, in which case the "back"-key 13 is used. If however a selection of further information in relation to an active icon is made, step 64, there are three different ways the control unit 20 can continue. If the selection of the further information concerned an application, step 68, the control unit 20 monitors which of the two soft keys have been depressed. If the user has selected an action by depressing the first soft navigation key 17, step 70, in this case by selecting to make a call, the action is performed, step 72, i.e. the call is being made and thereafter the display is made to show the original status bar again, step 56, after the call is ended. If the application was an SMS or e-mail application, the number or address of the sender can here be stored in the phone book. If the user did not select an action, step 70, i.e. by pressing the second soft navigation key 33, the control unit 20 connects the user to the main menu of the application in the menu system, step 74. If the selection of the further information was not related to an application, step 68, it is investigated if the icon is related to a function, step 76. If the icon is related to a function, step 76, the control unit 20 monitors which of the two soft keys have been depressed. If the user has selected an action, step 78, which might be to set the volume of an MP3-player, the action is performed, step 80, i.e. the setting is being made and thereafter the display is made to show the original status bar again, step 56, after the setting has been made. If the user did not select an action, step 78, the control unit 20 connects the user to the main menu of the function in the menu system, step 82. If the icon was not related to a function, step 76, it is related to some general status information of the phone. The control unit 20 therefore connects to the menu of the performance in the normal menu system of the phone, step 84. An example of this is Bluetooth ^{TM} synchronisation. As mentioned before, the user can at all times leave this further information by pressing the "back"-key 13 on the display, in which case he returns to the previous menu. In this way the user can go all the way back to the original status bar display.

The present invention has many advantages. It allows a user to directly obtain further information relating to an icon displayed in a status bar of the phone without having to do some lengthy navigation through the menu system of the phone. It also allows him to perform some actions in the functions or applications directly, which he otherwise would have to do by navigation in the menu system. Another advantage is that a user might not really know what the icon used means, in which case he can get information about the meaning in an easy fashion. In case the user did not know what the icon means, he can in existing phones only find the related information by chance when searching through the menu system, which might take a very long time or which he might not find at all.

The present invention can be varied in many ways. The applications can as an alternative be set such that an active application cannot in itself be changed by the selection of a piece of further information, but is limited to actions not changing the information content of the application, i.e. if for instance there is a call ongoing it cannot be interrupted. The first user input unit does not have to be a button on the side of the phone, but can be any other key not occupied for other important functions. The navigation keys can furthermore be provided in a numerous different ways. What is important is that the existing input units are used for navigating. Keys can also be provided in the form of keys displayed on a touch screen. A further variation of user input units is to use voice control for selecting further information about the status bar.

The control unit and the different application units are normally provided in the form of one or more processors with corresponding program memories containing suitable software code. The two stores are also preferably provided in the form of memories.

## Claims

1. Method of providing further information relating to the status of a portable electronic device (10) comprising the steps of:
providing an item of status information (32, 34, 35, 36, 38) relating to the performance of a portable electronic device, possibly activated applications or functions in the device, (step 56), and
upon detecting a selection of further information (step 58) providing limited further information relating to said item, (step 60).

2. Method according to claim 1, wherein the step of providing includes providing at least two items of status information and the step of providing limited further information includes simultaneously providing said limited further information relating to the two items.

3. Method according to claim 1 or 2, wherein said further information comprises a link back to said item of status information such as through a "back"-key.

4. Method according to claim 3, further comprising the step of removing the further information upon detecting selection of the link back to said item of status information and again presenting said item of status information.

5. Method according to any previous claim, wherein the further information provided related to an item of status information is a limited number of pieces of information (40, 42, 44, 45, 46, 47, 48, 50, 52, 54).

6. Method according to any previous claim, further including the step of detecting selection of an item of status information after providing limited further information, (step 62) and determining type of item selected (step 68, 76).

7. Method according to claim 6, further including the step of: if the first item of status information relates to an application, (step 68), determining if an action in relation to the application was selected, (step 70), and performing said action, (step 72) or providing a list of further possible actions and selections relating to the application (step 74) in dependence of the determination.

8. Method according to claim 6 or 7, further comprising the step of: if the first item of status information relates to a function, (step 76), determining if an action in relation to the function was selected, (step 78), and performing said action, (step 80) or providing a list of further possible actions and selections relating to the function (step 82) in dependence of the determination.

9. Method according to any of claims 6 - 8, further comprising the step of: if the first item of status information relates to the performance of the portable electronic device, (step 76), providing a list of further possible actions and selections relating to the performance (step 84).

10. Portable electronic device (10) for providing further information relating to the status of said portable electronic device comprising:
an information presentation unit (14),
at least one first user input unit (16), and
a control unit (20) arranged to:
provide an item of status information (32, 34, 35, 36, 38) relating to the performance of the portable electronic device and possibly activated applications and functions in the device on the information presentation unit, and
upon detecting a selection of further information via the user input unit, provide limited further information (40, 42, 44, 45, 46, 47, 48, 50, 52, 54) relating to said item of status information on the information presentation unit.

11. Portable electronic device (10) according to claim 10, wherein the control unit is arranged to provide at least two items of status information and to simultaneously provide limited further information relating to the two items.

12. Portable electronic device (10) according to claim 10 or 11, further including a second user input unit (13) for moving back to said item of status information.

13. Portable electronic device (10) according to claim 12, wherein the control unit (20) is further arranged to remove the further information from the information presentation unit upon detecting depression of the second user input unit (13) and again present said item of status information on the information presentation unit.

14. Portable electronic device (10) according to any of claims 10 - 13, wherein the further information provided related to an item of status information is a limited number of pieces of information.

15. Portable electronic device (10) according to any of claims 10 - 14, wherein the first user input unit (16) is provided as a button on the side of the portable communication device.

16. Portable electronic device (10) according to any of claims 10 - 15, wherein the control unit (20) is arranged to detect selection of an item of status information after providing limited further information and to determine type of item selected.

17. Portable electronic device (10) according to claim 16, wherein the control unit (20) is further arranged to, if the first item of status information relates to an application, determine if an action in relation to the application was selected and then perform said action or provide a list of further possible actions and selections relating to the application.

18. Portable electronic device (10) according to claim 16 or 17, wherein the control unit (20) is further arranged to, if the first item of status information relates to a function, determine if an action in relation to the function was selected and then perform said action or provide a list of further possible actions and selections relating to the function.

19. Portable electronic device (10) according to any of claims 16 - 18, wherein the control unit (20) is further arranged to, if the first item of status information relates to the performance of the portable electronic device, provide a list of further possible actions and selections relating to the performance.

20. Portable electronic device (10) according to any of claims 16 - 19, further comprising a second user input unit in the form of at least one soft key (17, 19) on a keypad (18) of the device, which second unit is used for selections made in relation to the further information shown on the information presentation unit.

21. Portable electronic device (10) according to any of claims 10 - 20, further comprising a status information store (22), from which the control unit (20) is arranged to retrieve said item of status information for provision on the information presentation unit.

22. Portable electronic device (10) according to any of claims 10 - 21, further comprising a further information store (24), from which the control unit is arranged to retrieve further information relating to said item of status information for provision on the information presentation unit.

23. Portable electronic device according to any of claims 10 - 22, in which it is a cellular phone.
